# EUROPÄISCHE PATENTSCHRIFT

(11) **EP 2 985 546 B1**
(45) Veröffentlichungstag und Bekanntmachung des Hinweises auf die Patenterteilung: **11.12.2019**
(21) Anmeldenummer: 15400037.6
(22) Anmeldetag: 10.08.2015
(51) Int. Cl.: F24T 10/13, F28F 9/013, F28F 9/02, F28F 21/06, F28D 9/04

(54) **WÄRMEÜBERTRAGUNGSELEMENT**
HEAT TRANSFER ELEMENT
ÉLEMENT DE TRANSFERT THERMIQUE

(30) Priorität: 13.08.2014 DE 102014012131
(43) Veröffentlichungstag der Anmeldung: 17.02.2016
(60) Teilanmeldung: 16001624.2
(73) Patentinhaber: Mefa Befestigungs- und Montagesysteme GmbH, 74635 Kupferzell (DE)
(72) Erfinder: Schneider, Martin, 74613 Öhringen (DE)
(74) Vertreter: Patentanwälte Schuster, Müller & Partner mbB

(56) Entgegenhaltungen:
- EP-A1- 2 392 884
- EP-A1- 2 738 504
- WO-A2-2014/085874
- DE-A1- 3 110 719
- DE-A1- 3 209 779
- DE-A1- 3 418 561
- US-A- 3 486 489
- US-A- 5 109 920
- US-A- 6 138 472
- US-A1- 2011 139 425

## Beschreibung

### Stand der Technik

Die Erfindung geht aus von einem Wärmeübertragungselement, nach Gattung des Anspruchs 1.

Wärmeübertragungselemente zur Energiegewinnung, wie beispielsweise flächige flexible Absorbermatten oder dgl. bzw. Energiespeicher, sind seit langem Stand der Technik. Diese dienen hauptsächlich als Energiequelle einer Wärmepumpe. Werden die flächigen Absorbermatten im Erdreich verbaut, ist oft eine sehr große auf die Erdoberfläche projizierte Einbaufläche notwendig. Die Energiespeicher sind sehr komplex in ihrem Aufbau.

Beispielsweise offenbart die Patentschrift DD 226 058 B3 ein derartiges flächiges flexibles Wärmeübertragungselement, in welchem Plastschläuche für den Transport des Wärmeträgers angeordnet und an deren Enden Versorgungsleitungen bzw. Speicherbehälter angeschlossen sind, wobei die Schläuche als Bindungselement Schuss in ein Kettengewirke eingebunden sind. Nachteilig an einer solchen technischen Lösung eines Wärmeübertragungselements ist, dass dieses in seiner flächigen Ausführungsform einen großen auf die Erdoberfläche projizierten Flächenbedarf im Erdreich aufweist. In einer aufgewickelten Ausführungsform wird der Wärmeübergang deutlich reduziert.

Des Weiteren zeigt die Offenlegungsschrift DD 293 882 A5 ebenfalls eine ebenflächige flexible Heizmatte, welche Schläuche zum Transport eines Energieträgers aufweist, so dass in einem Gewebe oder Gewirke zwischen in Querrichtung verlaufenden Fäden aus weichem, voluminösen, strangförmigen Material ein flexibler Schlauch mit im Vergleich zu den Fäden geringem Durchmesser mäanderförmig eingebunden ist, wobei auf einer Seite der Heizmatte die Fäden und der Schlauch eine Ebene bilden. Diese technische Lösung weist ebenfalls die vorgenannten Nachteile auf.

Einen hohen Flächenbedarf benötigt auch der in der Offenlegungsschrift DE 32 09 779 A1 offenbarte Heizkörper für Warmwasserflächenbeheizung, insbesondere Boden- oder Wandheizung, der aus flexiblen Kunststoffrohren, die in gegenseitigen Abständen zueinander angeordnet sind, besteht.

Der Erfindung liegt daher die Aufgabe zugrunde, bei zumindest gleicher Wärmeübertragungsleistung von oder an die Umgebung den großen Flächenbedarf beim Einbau eines Wärmeübertragungselements im Erdreich zu minimieren.

Aufgabe der Erfindung ist es, ein einfach konstruiertes Wärmeübertragungselement bereitzustellen, das platzsparend einsetzbar ist.

### Die Erfindung und ihre Vorteile

Das erfindungsgemäße Wärmeübertragungselement, mit den Merkmalen des Anspruchs 1, hat demgegenüber den Vorteil, dass das flexible Element des Wärmeübertragungselements aufgewickelt ist wodurch der mindestens eine Verteiler einen Versatz in Richtung der Breite des flexiblen Elements des Wärmeübertragungselements zum mindestens einen Sammler aufweist, dass mindestens ein Verteiler und mindestens ein Sammler an derselben Stirnseite des flexiblen Elements angeordnet sind und dass mindestens ein Verteiler und mindestens ein Sammler zumindest teilweise axial ineinander angeordnet sind. So weist das Wärmeübertragungselement bei einem Einbau im Erdreich einen sehr geringen auf die Erdoberfläche projizierten Flächenbedarf auf, wobei durch die erzeugte Spirale des flexiblen Elements des Wärmeübertragungselements der Wärmeübergang aufgrund des überall an der Wärmeübertragungsfläche im Vergleich zur Umgebung hohen Temperaturdifferenz optimal ist. Zusätzlich sind, da mindestens ein Verteiler und mindestens ein Sammler an derselben Stirnseite des flexiblen Elements angeordnet sind, auch die Anschlüsse für Sammler und Verteiler räumlich in unmittelbarer Nähe, so dass lange Leitungen zu den Anschlüssen von Sammler und Verteiler reduziert werden und dadurch die Anschlusstechnik optimiert wird. Auch ist beispielsweise eine schraubenförmige Anordnung des Wärmeübertragungselements, die senkrecht im Erdreich installiert wird, denkbar, bei der der auf die Erdoberfläche projizierte Flächenbedarf sehr gering ist und der Wärmetransfer aufgrund der durch eine solche Anordnung vergrößerten Wärmeübertragungsfläche optimiert wird. Eine spiralförmige Anordnung, bei welcher mindestens eine Längsseite innerhalb einer Ebene oder zumindest teilweise außerhalb einer Ebene angeordnet ist ebenso denkbar, wie eine Kombination dieser Anordnungen.

Nach einer vorteilhaften Ausgestaltung des erfindungsgemäßen Wärmeübertragungselements kann das Wärmeübertragungselement aufgrund des oder der verwendeten Materialien Druckbelastungen aufnehmen. Durch die Möglichkeit der Lastaufnahme bei stärkeren Druckbelastungen kann eine Beschädigung des Wärmeübertragungselements, hier insbesondere des flächigen flexiblen Elements des Wärmeübertragungselements, verhindert werden.

Nach einer zusätzlichen vorteilhaften Ausgestaltung des erfindungsgemäßen Wärmeübertragungselements sind der mindestens eine Verteiler und/oder der mindestens eine Sammler zumindest teilweise flexibel. Die zumindest teilweise Flexibilität der Anschlusselemente des Wärmeübertragungselements für den Vor- und Rücklauf bietet den Vorteil, dass die Anschlusselemente sich ihrer Umgebung in einem gewissen Grad anpassen können und somit zum einen ein Einbau, beispielsweise in das Erdreich, erleichtert und zum anderen eine Beschädigung der Anschlusselemente verhindert wird.

Nach einer zusätzlichen vorteilhaften Ausgestaltung des erfindungsgemäßen Wärmeübertragungselements ist das Wärmeübertragungselement zumindest teilweise aus Kunststoff. Die Ausführung des Wärmeübertragungselements in Kunststoff hat den Vorteil, dass so nahezu beliebige Formen hergestellt werden können, wodurch die Wärmeübertragung optimiert wird. Zudem sinken die Herstellungskosten, weil viele Einzelteile des erfindungsgemäßen Wärmeübertragungselements einfach und schnell durch Extrusion hergestellt werden können.

Nach einer zusätzlichen vorteilhaften Ausgestaltung des erfindungsgemäßen Wärmeübertragungselements ist das flexible Element zumindest teilweise aus Kunststoff. Hierbei ist vorteilhaft, dass durch den Einsatz von Kunststoff in der Produktion des flexiblen Elements die Wandstärken bei dennoch hoher Stabilität sehr klein ausgestaltet werden können. So wird die Umgebungsenergie aufgrund der geringen Wandstärken optimal genutzt.

Nach einer zusätzlichen vorteilhaften Ausgestaltung des erfindungsgemäßen Wärmeübertragungselements ist das flexible Element in Form einer flächigen Matte ausgestaltet. Vorteilhaft an einer derartigen Ausgestaltung des flexiblen Elements ist es, dass durch den Einsatz einer solchen Absorbermatte die Wärmeübertragungsfläche bei geringen Herstellungskosten sehr groß wird, wodurch die Umgebungsenergie, beispielsweise aus dem Erdreich, optimal genutzt werden kann.

Nach einer zusätzlichen vorteilhaften Ausgestaltung des erfindungsgemäßen Wärmeübertragungselements ist der mindestens eine Strömungskanal des flexiblen Elements eine Kapillare. Durch einen Kapillarströmungskanal im flexiblen flächigen Element des Wärmeübertragungselements wird das Wärmeträgermedium in den Kapillaren stärker erwärmt bzw. abgekühlt und somit die restliche Umgebungsenergie, beispielsweise aus dem Erdreich, besser genutzt.

Nach einer zusätzlichen vorteilhaften Ausgestaltung des erfindungsgemäßen Wärmeübertragungselements sind mindestens ein Verteiler und mindestens ein Sammler, mindestens zwei Verteiler und/oder mindestens zwei Sammler aus einem Bauteil.

Dadurch wird die Handhabung des Wärmeübertragungselements erleichtert und der Installations- und Wartungsaufwand reduziert.

Nach einer zusätzlichen vorteilhaften Ausgestaltung des erfindungsgemäßen Wärmeübertragungselements ist an mindestens einem Verteiler und/oder an mindestens einem Sammler mindestens eine Haltevorrichtung angeordnet. Die Haltevorrichtung kann beispielsweise in Form von Ösen, Nasen, Stiften, Hacken und/oder Ähnlichem ausgestaltet sein, so dass Installationshilfsmittel wie beispielsweise Seile, Bänder und/oder Ketten an den Haltevorrichtungen angebracht werden können. Dadurch wird der Installationsaufwand des erfindungsgemäßen Wärmeübertragungselements reduziert.

Nach einer zusätzlichen vorteilhaften Ausgestaltung des erfindungsgemäßen Wärmeübertragungselements ist mindestens eine Längsseite an einem Verteiler in einem spitzen Winkel, einem rechten Winkel und/oder einem stumpfen Winkel angeordnet und/oder mindestens eine Längsseite an einem Sammler in einem spitzen Winkel, einem rechten Winkel und/oder einem stumpfen Winkel angeordnet. Das Variieren des Winkels erlaubt eine spannungsfreie Installation des Sammlers, des Verteilers und/oder des flexiblen Elements bei unterschiedlichen Positionen und verschiedenen Anordnungen.

Weitere Vorteile und vorteilhafte Ausgestaltung der Erfindung sind der nachfolgenden Beschreibung, den Ansprüchen und den Zeichnungen entnehmbar.

### Zeichnung

Bevorzugte Ausführungsbeispiele des erfindungsgemäßen Gegenstands sind in der Zeichnung dargestellt und werden im Folgenden näher erläutert. Es zeigen
- Fig. 1: eine perspektivische Darstellung eines geraden Wärmeübertragungselements,
- Fig. 2: eine perspektivische Darstellung eines flexiblen Wärmeübertragungselements,
- Fig. 3: eine perspektivische Darstellung des flexiblen Elements des Verteilers bzw. Sammlers eines Wärmeübertragungselements,
- Fig. 4: eine Detailansicht der in Fig. 3 gezeigten perspektivischen Darstellung des flexiblen Elements des Verteilers bzw. des Sammlers eines Wärmeübertragungselements,
- Fig. 5: eine perspektivische Detaildarstellung des flexiblen Elements eines Wärmeübertragungselements,
- Fig. 6: einen Schnitt durch die X-X-Ebene des in Fig. 5 dargestellten flexiblen Elements eines Wärmeübertragungselements,
- Fig. 7: eine Seitenansicht eines Wärmeübertragungselements als Spiralabsorber ohne Abstand der Wicklungen,
- Fig. 8: eine perspektivische Darstellung eines Wärmeübertragungselements als Spiralabsorber ohne Abstand der Wicklungen,
- Fig. 9: eine Seitenansicht eines Wärmeübertragungselements als Spiralabsorber mit Abstand der Wicklungen,
- Fig. 10: eine perspektivische Darstellung eines Wärmeübertragungselements als Spiralabsorber mit Abstand der Wicklungen,
- Fig. 11: eine perspektivische Darstellung zweier aufgewickelter Wärmeübertragungselemente als Wärmetauschereinheit,
- Fig. 12: eine Draufsicht zweier aufgewickelter Wärmeübertragungselemente als Wärmetauschereinheit,
- Fig. 13: eine Seitenansicht eines weiteren Ausführungsbeispiels eines Wärmeübertragungselements mit einem Aspekt der Erfindung,

- Fig. 14: eine perspektivische Ansicht eines Ausschnittes des Wärmeübertragungselements, gemäß Fig. 13,
- Fig. 15: eine Seitenansicht eines Ausschnittes des erfindungsgemäßen Wärmeübertragungselements, gemäß Fig. 13,
- Fig. 16: eine Schnittansicht auf einen Ausschnitt des Wärmeübertragungselements, gemäß Fig. 13,

- Fig. 17: eine Seitenansicht eines Wärmeübertragungselementes mit einem Aspekt der Erfindung, und
- Fig. 18: eine Seitenansicht eines weiteren Wärmeübertragungselementes mit einem Aspekt der Erfindung.

### Beschreibung der Ausführungsbeispiele

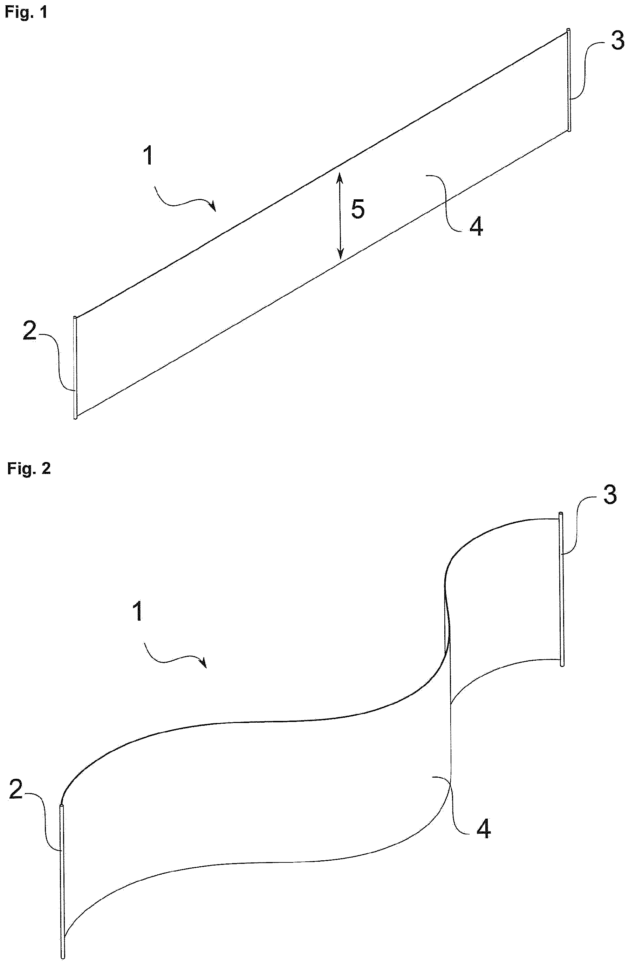

In der Fig. 1 wird eine perspektivische Darstellung eines flächigen geraden Wärmeübertragungselements 1 mit einem Verteiler 2 und einem Sammler 3, die an entgegengesetzten Stirnseiten des flexiblen Elements 4 angeordnet sind, gezeigt. Hierbei ist sowohl der Verteiler 2 als auch der Sammler 3 rohrförmig über der gesamten Breite 5 des flexiblen Elements 4, hier als Absorbermatte ausgeführt, angeordnet.

Fig. 2 zeigt eine perspektivische Darstellung eines flächigen flexiblen Wärmeübertragungselements 1 mit einem Verteiler 2 und einem Sammler 3, die an entgegengesetzten Seiten des flexiblen Elements 4 angeordnet sind. Die Flexibilität des Wärmeübertragungselements 1 bietet den Vorteil, dass sich das Wärmeübertragungselement 1 seiner Umgebung optimal anpassen kann und somit zum einen ein Einbau, beispielsweise in das Erdreich, erleichtert und zum anderen eine Beschädigung des flexiblen Elements 4 des Wärmeübertragungselements 1 verhindert.

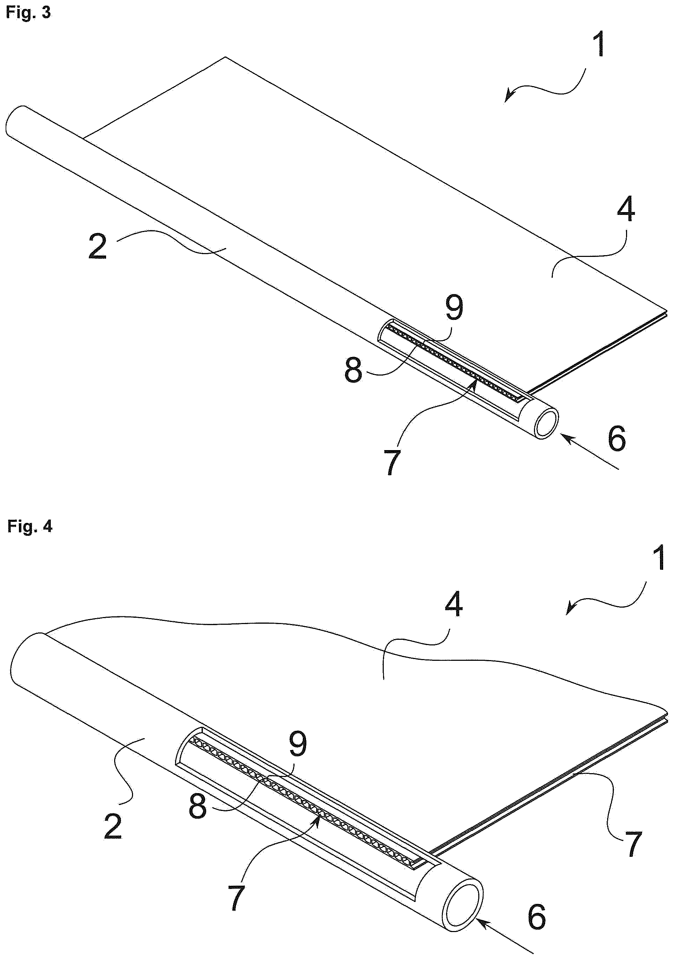

In Fig. 3 wird eine perspektivische Darstellung des flexiblen Elements 4 und des Verteilers 2, hier beispielsweise ein Verteiler- oder Anschlussrohr, eines Wärmeübertragungselements 1 gezeigt. Dem hier dargestellten Verteiler 2 entspricht ein am entgegengesetzten Ende des flexiblen Elements 4 angeordneter hier nicht dargestellter Sammler 3, beispielsweise ein Sammelrohr, wie in den Fign. 1 und 2 bereits zuvor erläutert. Das Wärmeträgermedium strömt in Richtung des Pfeils 6 in den Verteiler 2 und von dort in die Strömungskanäle 7 des flexiblen Elements 4, hier beispielsweise eine flächige flexible Absorbermatte, und wird durch den Sammler 3 am anderen Ende des flexiblen Elements 4 aufgenommen. Das flexible Element 4 mit einer Breite 5 ist insbesondere aus einem Kunststoff gefertigt, zum Beispiel durch Extrusion, wobei die Wandstärke der inneren Wand 8 und der äußeren Wand 9 des flexiblen Elements 4 dünn ausgeführt sind, so dass ein verbesserter Wärmeüber- und -durchgang zur Umgebung erzielt wird, wodurch die Restwärme zum Beispiel des Erdreichs optimal genutzt werden kann. Die Strömungskanäle 7 des flexiblen Elements 4 sind vorzugsweise als Kapillarkanäle ausgestaltet.

Eine Detailansicht der in Fig. 3 gezeigten perspektivischen Darstellung des flexiblen Elements 4 des Verteilers 2 bzw. des hier nicht gezeigten Sammlers 3 eines Wärmeübertragungselements 1 wird in Fig. 4 dargestellt. Der Aufriss zeigt die Anbindung des flexiblen Elements 4 an den Verteiler 2 bzw. den Sammler 3 sowie die Strömungskanäle 7 in vergrößerter Darstellung.

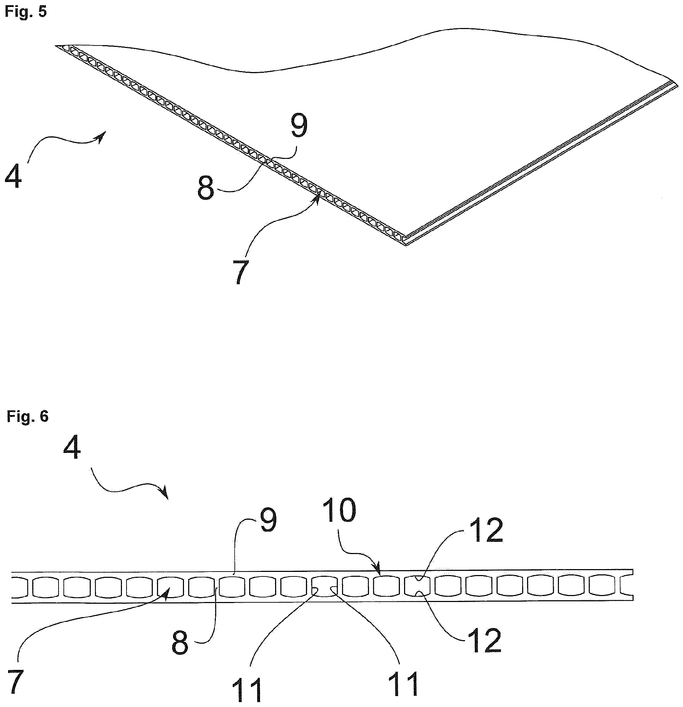

In der Fig. 5 wird eine perspektivische Detaildarstellung des flexiblen Elements 4 eines Wärmeübertragungselements 1 mit Strömungskanälen 7 gezeigt. In der dargestellten Form des flexiblen Elements 4 sind die Strömungskanäle 7 parallel zu einander angeordnet, so dass das Wärmeträgermedium nach dem Eintritt in den hier nicht gezeigten Verteiler 2 parallel durch die Strömungskanäle 7 des flexiblen Elements 4 strömt. Darüber hinaus ist es möglich, dass die Strömungskanäle 7 mäanderförmig im flexiblen Element 4 des Wärmeübertragungselements 1 angeordnet sind. Hierbei können mehrere Mäander parallel im flexiblen Element 4 angeordnet sein und parallel durchströmt werden. Außerdem ist es ebenso möglich, dass nur ein einzelner Mäander im flexiblen Element 4 angeordnet ist. Die Längsseite des flexiblen Elements 4, beispielsweise ein flexibler plattenförmiger Hohlkörper, ist verschlossen.

Fig. 6 zeigt einen Schnitt durch die X-X-Ebene des in Fig. 5 dargestellten flexiblen Elements 4 eines Wärmeübertragungselements 1. Die Strömungskanäle 7 haben hier die Form eines abgerundeten Rechtecks 10. Hierbei sind die vertikalen Kanten 11 parallel zueinander angeordnet und mit zwei Bögen 12 miteinander zu einem abgerundeten Rechteck 10 verbunden. Die Form der Strömungskanäle 7 ist jedoch variabel. Hier sind alle beliebigen Formen, wie Kreise oder dgl., denkbar. Fig. 6 zeigt darüber hinaus die dünnen inneren Wände 8 und die dünnen äußeren Wände 9 des flexiblen Elements 4, die einen optimalen Wärmeübergang und Wärmedurchgang zur Umgebung ermöglichen.

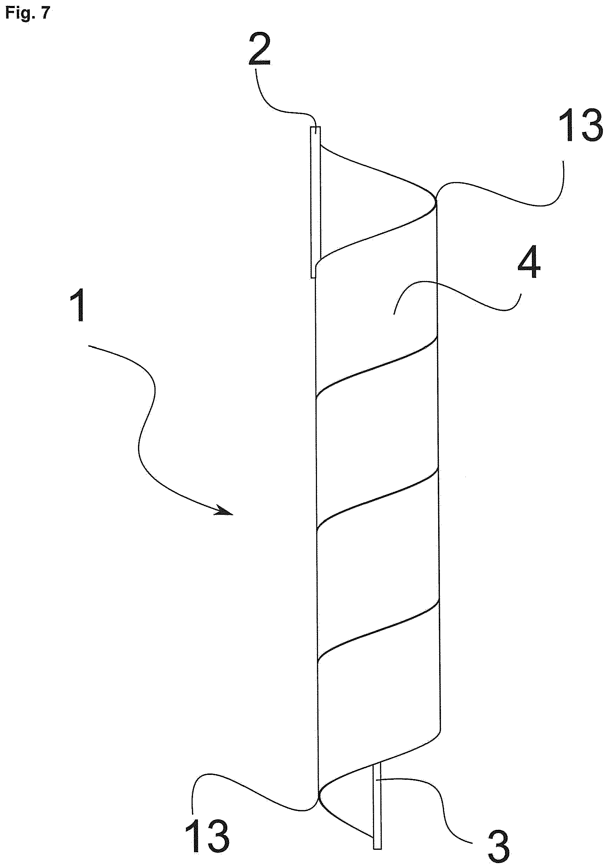

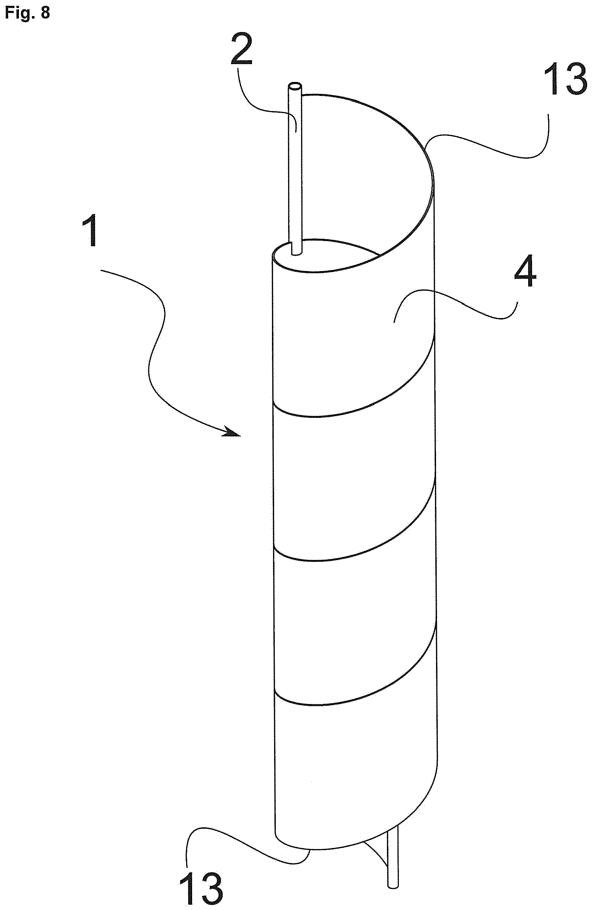

Fig. 7 zeigt eine Seitenansicht eines Wärmeübertragungselements 1 als Spiralabsorber ohne Abstand der Wicklungen. Fig. 8 zeigt die dazugehörige perspektivische Darstellung eines erfindungsgemäßen Wärmeübertragungselements 1 als Spiralabsorber ohne Abstand der Wicklungen. Die Wärmeübertragungselemente 1 sind als Wärmetauscher im Erdreich, in Tanks oder sonstigen Behältern, frei oder in einem Rahmen angeordnet für Luft- oder fließende und stehende Gewässer bzw. Medien einsetzbar. Die feste Verbindung als Rohr erfolgt vorzugsweise durch Verschweißen der sich aufgrund der Spiralform gegenüberstehenden Längsseiten 13 des Wärmeübertragungselements 1. Das flexible Element 4 des Wärmeübertragungselements 1 ist hierbei aufgewickelt, wobei der mindestens eine Verteiler 2 einen Versatz in Richtung der Breite 5 des flexiblen Elements 4 des Wärmeübertragungselements 1 zum mindestens einen Sammler 3 aufweist. Durch eine derartige Streckung des aufgewickelten Wärmeübertragungselements 1 weist dieses bei einem Einbau im Erdreich einen sehr geringen auf die Erdoberfläche projizierten Flächenbedarf auf. Dennoch ist der Wärmeübergang aufgrund der überall an der Wärmeübertragungsfläche des Wärmeübertragungselements 1 hohen Temperaturdifferenz zur Umgebung optimal.

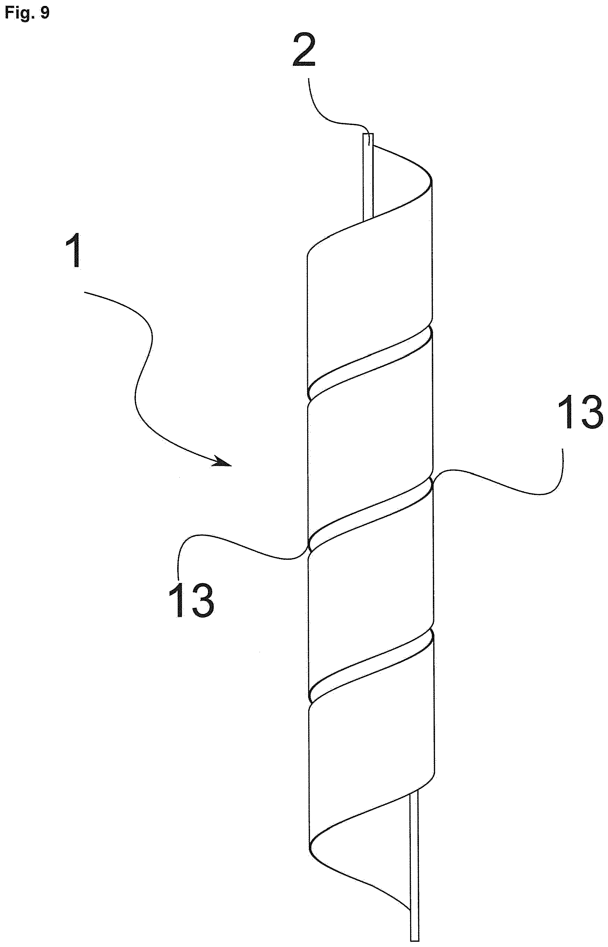

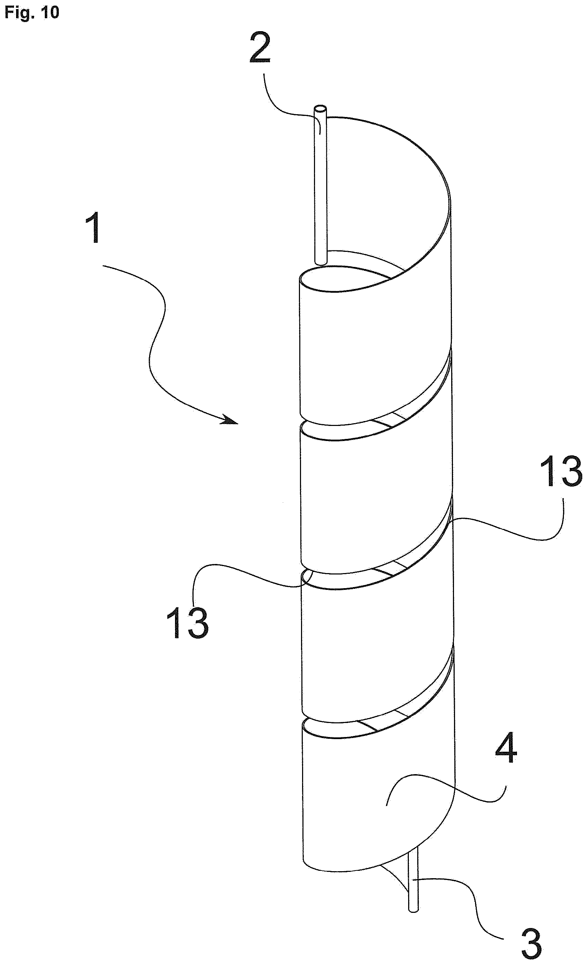

In den Fign. 9 und 10 werden dagegen eine Seitenansicht eines Wärmeübertragungselements 1 als Spiralabsorber mit Abstand der Wicklungen, d. h. nicht verbunden oder aber mit Fixierelementen auf Abstand verbunden, und eine perspektivische Darstellung eines erfindungsgemäßen Wärmeübertragungselements 1 als Spiralabsorber mit Abstand der Wicklungen dargestellt.

Die in den Fign. 7 bis 10 gezeigten Spiralabsorber können in einer beliebigen Anordnung zusammengeschlossen installiert werden, beispielsweise übereinander, nebeneinander oder über- und nebeneinander. Bevorzugt sind der Verteiler 2 und der Sammler 3 parallel zu einer durch das Wärmeübertragungselemente 1 verlaufenden Längsachse angeordnet. Darüber hinaus sind an den Spiralabsorbern Sicherungslaschen angeordnet, die ein Einbringen in das Erdreich erleichtern. Neben einem vertikalen Einbau ist auch ein horizontaler Einbau der Spiralabsorber möglich.

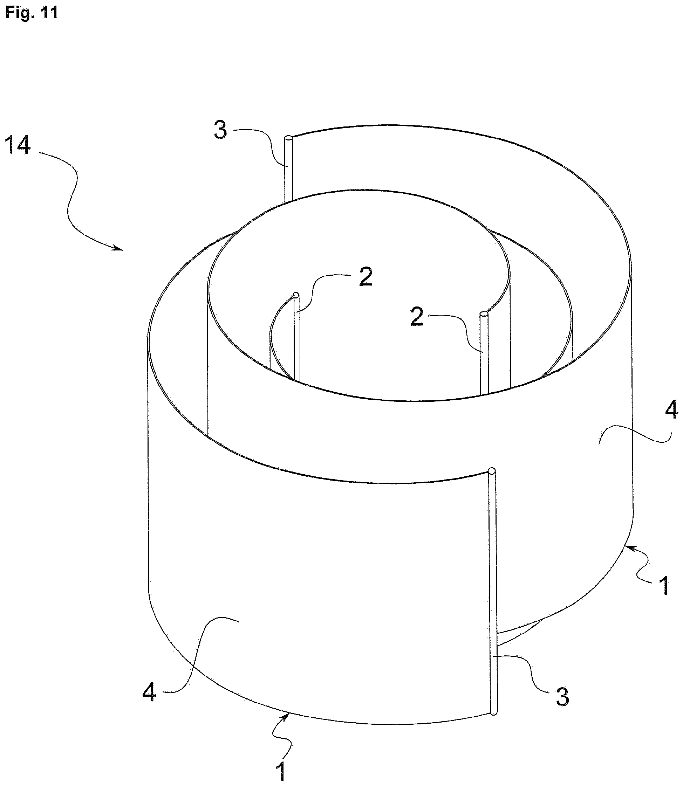

Eine perspektivische Darstellung zweier aufgewickelter Wärmeübertragungselemente 1 als Wärmetauschereinheit 14 wird in Fig. 11 dargestellt. Hierbei sind die Verteiler 2 innen an dem flexiblen Element 4 des jeweiligen Wärmeübertragungselements 1 angeordnet. Die Sammler 3 sind dagegen im äußeren Bereich der Wärmetauschereinheit 14 an den Wärmeübertragungselementen 1 angeordnet.

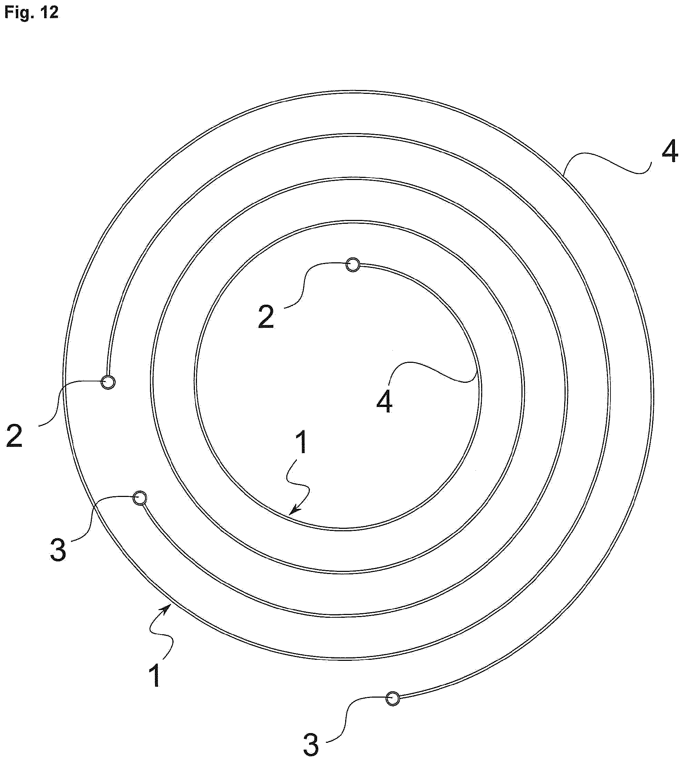

Fig. 12 zeigt eine Draufsicht zweier aufgewickelter Wärmeübertragungselemente 1 als Wärmetauschereinheit 14. Hierbei ist das innere Wärmeübertragungselement 1 in zweieindreiviertel Wicklungen und das äußere Wärmeübertragungselement 1 in eineindreiviertel Wicklungen ausgeführt.

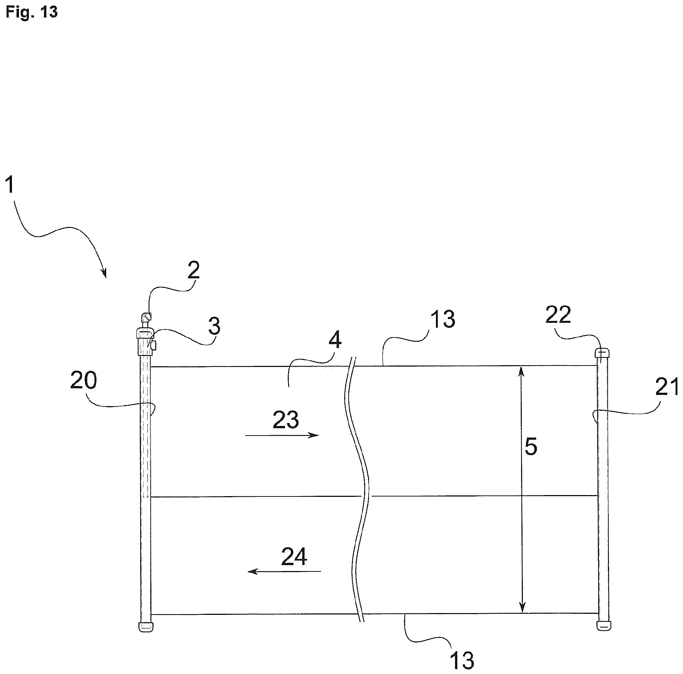

Fig. 13 zeigt eine Seitenansicht eines Wärmeübertragungselements 1 mit einem Verteiler 2 und einem Sammler 3, die an einer Stirnseite 20 des flexiblen Elements 4 angeordnet sind. Das flexible Element 4 weist eine Breite 5 und zwei Längsseiten 13 auf. An einer der Stirnseite 20 gegenüberliegenden Stirnseite 21 des flexiblen Elements 4 ist ein geschlossenes Verbindungselement 22 angeordnet, welches die in Fig. 4 dargestellten Strömungskanäle 7 miteinander verbindet. In diesem Ausführungsbeispiel strömt das Wärmeträgermedium in den Verteiler 2 ein und wird von diesem auf die in Fig. 4 dargestellten Strömungskanäle 7 verteilt, dabei ist die Strömungsrichtung durch den Pfeil 23 gekennzeichnet. An der Stirnseite 21 gelangt das Wärmeträgermedium in das geschlossene Verbindungselement 22, welches das Wärmeträgermedium auf die in Fig. 4 dargestellten Strömungskanäle 7 verteilt, durch welche das Wärmeträgermedium in die durch den Pfeil 24 gekennzeichnete Richtung strömt. Somit strömt das Wärmeträgermedium in den Sammler 3 und wird aus dem Wärmeübertragungselement 1 hinausgeleitet.

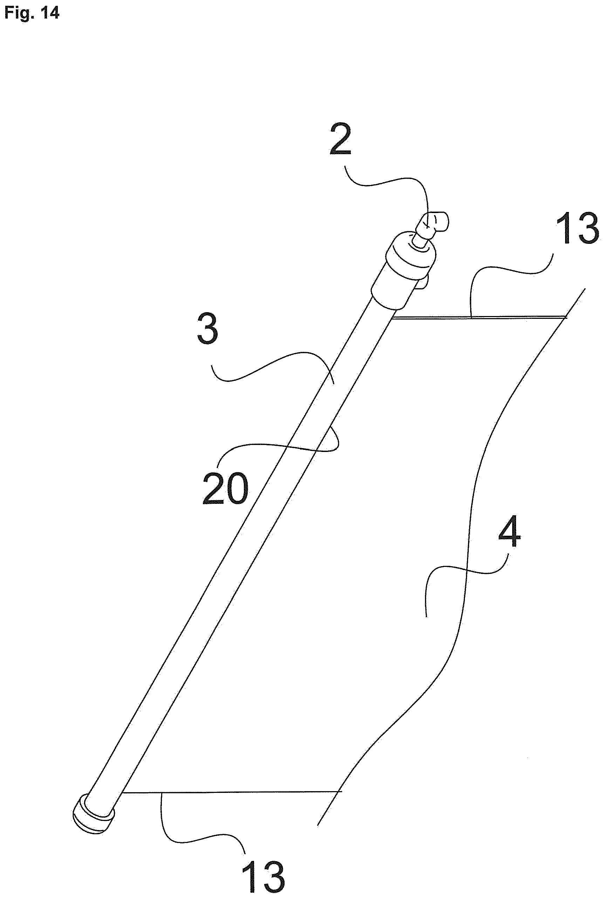

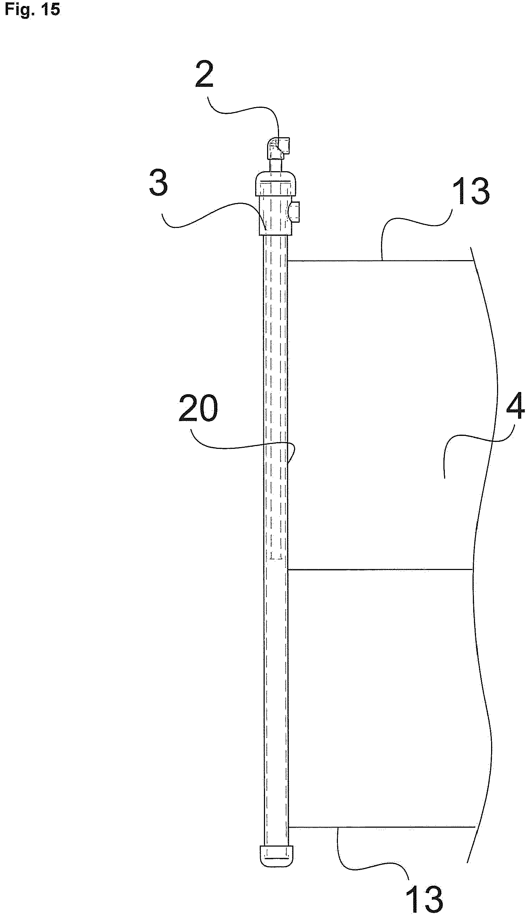

Fig. 14 und Fig. 15 zeigen eine perspektivische Ansicht und eine Seitenansicht eines Ausschnittes des Wärmeübertragungselements 1, gemäß Fig. 13.

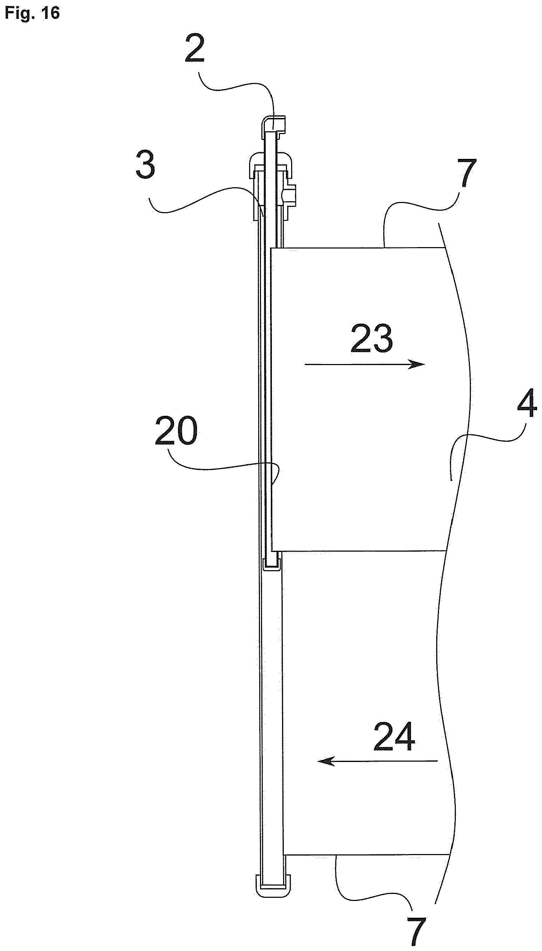

Fig. 16 zeigt eine Schnittansicht auf einen Ausschnitt des Wärmeübertragungselements 1, gemäß Fig. 13. In diesem Ausführungsbeispiel sind der Verteiler 2 und der Sammler 3 in axial ineinander angeordneter Bauweise als ein Bauteil ausgeführt. Das Wärmeträgermedium strömt in den Verteiler 2 und von dort in die in Fig. 4 dargestellten Strömungskanäle 7, die innerhalb des oberen Teils des flexiblen Elements 4 angeordnet sind. Die Strömungsrichtung des Wärmemediums ist mit dem Pfeil 23 gekennzeichnet. Der Rücklauf des Wärmeträgermediums geschieht über das in Fig. 13 dargestellte Verbindungselement 22, welches das Wärmeträgermedium auf die in Fig. 4 dargestellten Strömungskanäle 7, die innerhalb des unteren Teils des flexiblen Elements 4 angeordnet sind, in die mit dem Pfeil 24 gekennzeichnete Richtung verteilt. Das Wärmeträgermedium strömt dann in den Sammler 3, von wo aus es aus dem Wärmeübertragungselement 1 hinausgeleitet wird.

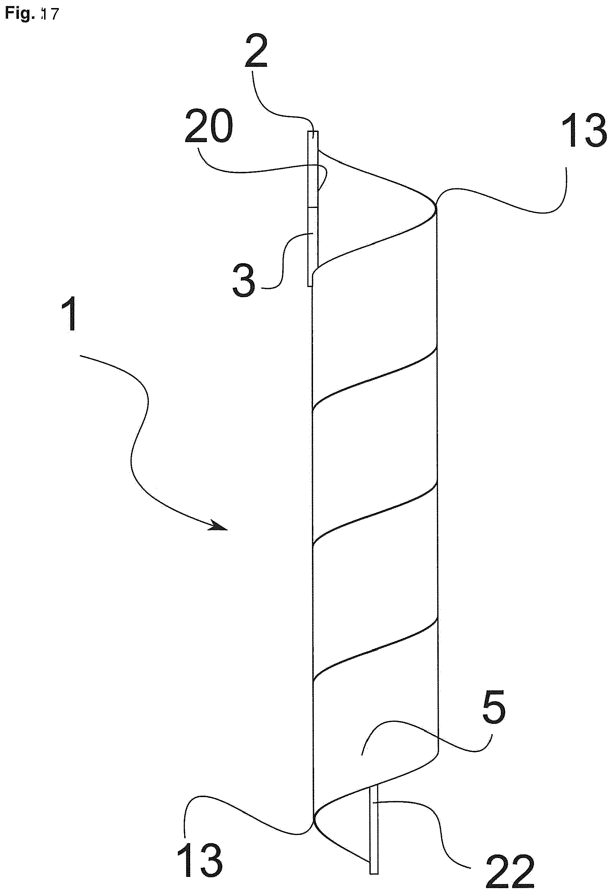

Fig. 17 zeigt eine Seitenansicht eines Wärmeübertragungselements 1. Hier ist das flexible Element 4 in einer schraubenförmigen Anordnung ausgeführt. Auf diese Weise wird der flächenmäßige Platzbedarf für die Installation reduziert. Durch diese Anordnung wird sichergestellt, dass der Temperaturgradient zwischen der Oberfläche des flexiblen Elements 4 und der Umgebung vergrößert wird, was die Effizienz des Wärmeübertragungselements 1 steigert. Des Weiteren ist für diese Anordnung notwendig den Winkel zwischen dem Verteiler 2 bzw. dem Sammler 3 und der Längsseite 13 des flexiblen Elements 4 der Art zu verändern, dass es aufgrund der Wicklungen zu keinen Spannungen im Wärmeübertragungselement 1 kommt.

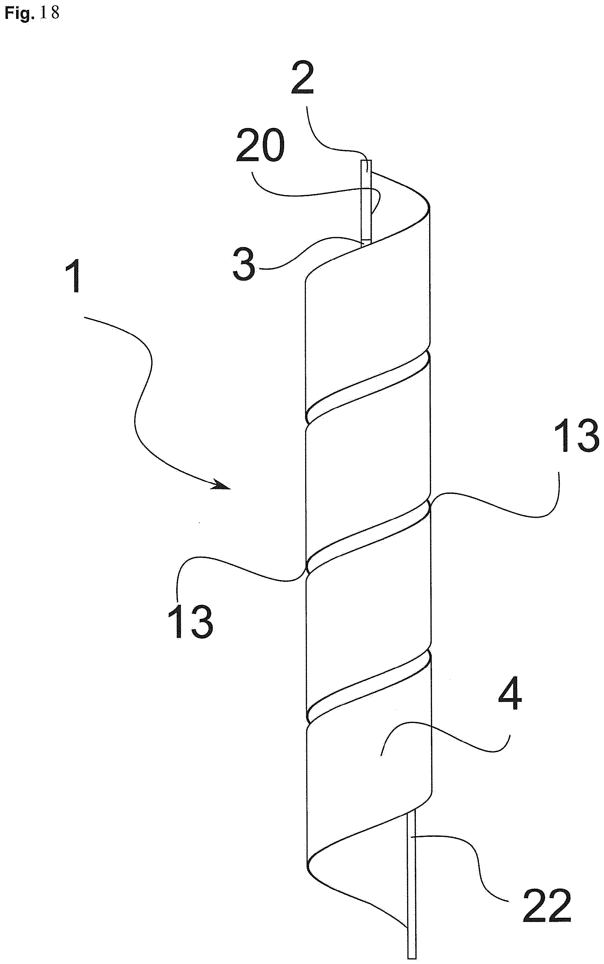

Fig. 18 zeigt eine Seitenansicht eines weiteren Wärmeübertragungselements 1. Im Unterschied zu der in Fig. 17 beschriebenen Ausführung ist bei dieser Anordnung ein Abstand zwischen den einzelnen Wicklungen des flexiblen Elements 4. Dadurch wird der Wärmetransfer zwischen den einzelnen Wicklungen reduziert und somit die Effizienz des Wärmeübertragungselements 1 erhöht. Selbstverständlich ist neben einem vertikalen Einbau auch ein horizontaler Einbau des Wärmeübertragungselements 1 möglich.

Alle hier dargestellten Merkmale können sowohl einzeln als auch in beliebiger Kombination miteinander erfindungswesentlich sein.

### Bezugszahlenliste

- 1: Wärmeübertragungselement
- 2: Verteiler
- 3: Sammler
- 4: flexibles Element
- 5: Breite
- 6: Pfeil
- 7: Strömungskanal
- 8: innere Wand
- 9: äußere Wand
- 10: Rechteck
- 11: Kanten
- 12: Bogen
- 13: Längsseite
- 14: Wärmetauschereinheit
- 20: Stirnseite
- 21: Stirnseite
- 22: Verbingungselement
- 23: Pfeil
- 24: Pfeil
- 25: Element
- 26: Stirnseite

## Patentansprüche

1. Wärmeübertragungselement (1), mit zumindest einem flexiblen Element (4), an welchem mindestens ein Verteiler (2) und mindestens ein Sammler (3) angeordnet ist, wobei das flexible Element (4), mindestens eine Längsseite (13), mindestens eine Breite (5), mindestens zwei Strömungskanäle (7), mindestens zwei Stirnseiten (20, 21) und ein geschlossenes Verbindungselement (22) aufweist, welches die Strömungskanäle (7) miteinander verbindet, wobei eine der Stirnseiten (21) der anderen Stirnseite (20) gegenüberliegend angeordnet ist, wobei der mindestens eine Sammler (3) und der mindestens eine Verteiler (2) an einer der Stirnseiten (20) angeordnet sind und das Verbindungselement (22) an der gegenüberliegenden Stirnseite (21) angeordnet ist, wobei das flexible Element (4) aufgewickelt ist, wobei der mindestens eine Verteiler (2) einen Versatz in Richtung der Breite (5) des flexiblen Elements (4) des Wärmeübertragungselements (1) zum mindestens einen Sammler (3) aufweist, wobei der mindestens eine Verteiler (2) und der mindestens eine Sammler (3) zumindest teilweise axial ineinander angeordnet sind.

2. Wärmeübertragungselement (1) nach Anspruch 1,
**dadurch gekennzeichnet,**
**dass** das Wärmeübertragungselement (1) Druckbelastungen aufnehmen kann.

3. Wärmeübertragungselement (1) nach Anspruch 1 oder Anspruch 2,
**dadurch gekennzeichnet,**
**dass** der mindestens eine Verteiler (2) und/oder der mindestens eine Sammler (3) zumindest teilweise flexibel sind.

4. Wärmeübertragungselement (1) nach einem der vorhergehenden Ansprüche,
**dadurch gekennzeichnet,**
**dass** das Wärmeübertragungselement (1) zumindest teilweise aus Kunststoff ist.

5. Wärmeübertragungselement (1) nach einem der vorhergehenden Ansprüche,
**dadurch gekennzeichnet,**
**dass** das flexible Element (4) zumindest teilweise aus Kunststoff ist.

6. Wärmeübertragungselement (1) nach einem der vorhergehenden Ansprüche,
**dadurch gekennzeichnet,**
**dass** das flexible Element (4) in Form einer Matte ausgestaltet ist.

7. Wärmeübertragungselement (1) nach einem der vorhergehenden Ansprüche,
**dadurch gekennzeichnet,**
**dass** der mindestens eine Strömungskanal (7) des flexiblen Elements (4) eine Kapillare ist.

8. Wärmeübertragungselement (1) nach einem der vorhergehenden Ansprüche,
**dadurch gekennzeichnet,**
**dass** mindestens ein Verteiler (2) und mindestens ein Sammler (3), mindestens zwei Verteiler (2) und/oder mindestens zwei Sammler (3) aus einem Bauteil sind.

9. Wärmeübertragungselement (1) nach einem der vorhergehenden Ansprüche,
**dadurch gekennzeichnet,**
**dass** an mindestens einem Verteiler (2) und/oder an mindestens einem Sammler (3) mindestens eine Haltevorrichtung angeordnet ist.

10. Wärmeübertragungselement (1) nach einem der vorhergehenden Ansprüche,
**dadurch gekennzeichnet,**
**dass** mindestens eine Längsseite (13) an einem Verteiler (2) in einem spitzen Winkel zu mindestens einer Längsachse eines Verteilers (2), rechten Winkel zu mindestens einer Längsachse eines Verteilers (2) und/oder stumpfen Winkel zu mindestens einer Längsachse eines Verteilers (2) angeordnet ist
und/oder
**dass** mindestens eine Längsseite (13) an einem Sammler (3) in einem spitzen Winkel zu mindestens einer Längsachse eines Sammlers (3), rechten Winkel zu mindestens einer Längsachse eines Sammlers (3) und/oder stumpfen Winkel zu mindestens einer Längsachse eines Sammlers (3) angeordnet ist.

## Claims

1. Heat transfer element (1) with at least one flexible element (4) on which at least one distributor (2) and at least one collector (3) is arranged, wherein the flexible element (4) comprises at least one longitudinal side (13), at least one width (5), at least two flow channels (7), at least two end faces (20, 21) and a closed connection element (22) which connects the flow channels (7) to each other, wherein one of the end faces (21) is arranged opposite the other end face (20), wherein the at least one collector (3) and the at least one distributor (2) are arranged on one of the end faces (20) and the connection element (22) is arranged on the opposite end face (21), wherein the flexible element (4) is wound up, wherein the at least one distributor (2) is offset in the direction of the width (5) of the flexible element (4) of the heat transfer element (1) with regard to the at least one collector (3), wherein the at least one distributor (2) and the at least one collector (3) are arranged at least partially axially in each other.

2. Heat transfer element (1) according to claim 1
**characterised in that**
the heat transfer element (1) can take up pressure loads.

3. Heat transfer element (1) according to claim 1 or claim 2
**characterised in that**
the at least one distributor (2) and/or the at least one collector (3) are at least partially flexible.

4. Heat transfer element (1) according to any one of the preceding claims
**characterised in that**
the heat transfer element (1) is at least partially made of plastic.

5. Heat transfer element (1) according to any one of the preceding claims
**characterised in that**
the flexible element (4) is at least partially made of plastic.

6. Heat transfer element (1) according to any one of the preceding claims
**characterised in that**
the flexible element (4) is designed in the form of a mat.

7. Heat transfer element (1) according to any one of the preceding claims
**characterised in that**
the at least one flow channel (7) of the flexible element (4) is a capillary.

8. Heat transfer element (1) according to any one of the preceding claims
**characterised in that**
at least one distributor (2) and at least one collector (2), at least two distributors (2) and/or at least two collectors (3) are formed of one component.

9. Heat transfer element (1) according to any one of the preceding claims
**characterised in that**
on at least one distributor (2) and/or on at least one collector (3) a holding device is arranged.

10. Heat transfer element (1) according to any one of the preceding claims
**characterised in that**
at least one longitudinal side (13) on a distributor is arranged at an acute angle to at least one longitudinal axis of a distributor (2), right angle to at least one longitudinal axis of a distributor (2) and/or obtuse angle to at least one longitudinal axis of a distributor (2)
and/or
**in that** at least one longitudinal side (13) on a collector (3) is arranged at an acute angle to at least one longitudinal axis of a collector (3), right angle to at least one longitudinal axis of a collector (3) and/or obtuse angle to at least one longitudinal axis of a collector (3).

## Revendications

1. Élément de transfert thermique (1), pourvu d'au moins un élément souple (4), sur lequel est placé au moins un distributeur (2) et au moins un collecteur (3), l'élément souple (4), comportant au moins un côté longitudinal (13), au moins une largeur (5), aux moins deux canaux d'écoulement (7), au moins deux faces frontales (20, 21) et un élément d'assemblage (22) clos, lequel assemble l'un à l'autre les canaux d'écoulement (7), l'une des faces frontales (21) étant placée à l'opposée de l'autre face frontale (20), l'au moins un collecteur (3) et l'au moins un distributeur (2) étant placés sur l'une des faces frontales (20) et l'élément d'assemblage (22) étant placé sur la face frontale (21) opposée, l'élément souple (4) étant enroulé, l'au moins un distributeur (2) présentant un déport dans la direction de la largeur (5) de l'élément souple (4) de l'élément de transfert thermique (1) par rapport à l'au moins un collecteur (3), l'au moins un distributeur (2) et l'au moins collecteur (3) étant placés au moins partiellement l'un dans l'autre dans la direction axiale.

2. Élément de transfert thermique (1) selon la revendication 1,
**caractérisé en ce que**
l'élément de transfert thermique (1) est capable d'absorber des contraintes en pression.

3. Élément de transfert thermique (1) selon la revendication 1 ou la revendication 2,
**caractérisé en ce que**
l'au moins un distributeur (2) et/ou l'au moins un collecteur (3) sont au moins partiellement souples.

4. Élément de transfert thermique (1) selon l'une quelconque des revendications précédentes,
**caractérisé en ce que**
l'élément de transfert thermique (1) est au moins partiellement en matière plastique.

5. Élément de transfert thermique (1) selon l'une quelconque des revendications précédentes,
**caractérisé en ce que**
l'élément souple (4) est au moins partiellement en matière plastique.

6. Élément de transfert thermique (1) selon l'une quelconque des revendications précédentes,
**caractérisé en ce que**
l'élément souple (4) est conçu sous la forme d'une natte.

7. Élément de transfert thermique (1) selon l'une quelconque des revendications précédentes,
**caractérisé en ce que**
l'au moins un canal d'écoulement (7) de l'élément souple (4) est un capillaire.

8. Élément de transfert thermique (1) selon l'une quelconque des revendications précédentes,
**caractérisé en ce**
**qu'**au moins un distributeur (2) et au moins un collecteur (3), sont au moins deux distributeurs (2) et/ou au moins deux collecteurs (3) en un composant.

9. Élément de transfert thermique (1) selon l'une quelconque des revendications précédentes,
**caractérisé en ce que**
sur au moins un distributeur (2) et/ou sur au moins un collecteur (3) est placé au moins un dispositif de maintien.

10. Élément de transfert thermique (1) selon l'une quelconque des revendications précédentes,
**caractérisé en ce**
**qu'**au moins un côté longitudinal (13) sur un distributeur (2) est placé en angle aigu par rapport à au moins un axe longitudinal d'un distributeur (2), en angle droit par rapport à au moins un axe longitudinal d'un distributeur (2) et/ou en angle obtus par rapport à au moins un axe longitudinal d'un distributeur (2) et/ou
en ce qu'au moins un côté longitudinal (13) sur un collecteur (3) est placé en angle aigu par rapport à au moins un axe longitudinal d'un collecteur (3), en angle droit par rapport à au moins un axe longitudinal d'un collecteur (3) et/ou en angle obtus par rapport à au moins un axe longitudinal d'un collecteur (3).
